Europäisches Patentamt

European Patent Office

Office européen des brevets

(11) Publication number: **0 356 601**
**A1**

# EUROPEAN PATENT APPLICATION

(21) Application number: 88830351.8

(22) Date of filing: 30.08.88

(51) Int. Cl.⁵: **B64C 15/02 , B64C 29/00 , B64C 39/10 , B64C 21/04**

(43) Date of publication of application:
07.03.90 Bulletin 90/10

(84) Designated Contracting States:
AT BE CH DE ES FR GB GR IT LI LU NL SE

(71) Applicant: **AERITALIA - Società Aerospaziale Italiana - p.A.**
**Corso Marche 41**
**I-10146 Torino(IT)**

(72) Inventor: **Capuani, Alfredo**
**Largo Francia 113**
**I-10138 Torino(IT)**

(74) Representative: **Notaro, Giancarlo et al**
**c/o Jacobacci-Casetta & Perani S.p.A. Via Alfieri, 17**
**I-10121 Torino(IT)**

(54) **Improvements in jet-propelled aircraft.**

(57) In a jet-propelled aircraft of the type in which the propulsion jets are directed onto a wing (4) so as to achieve an ejector effect, two vertical tail-fin (10) surfaces are provided and extend downwardly beneath the centre of gravity of the aircraft to return the aircraft to a correct attitude when it tends to assume a position in which its longitudinal axis is transversal to the direction of flight.

FIG. 1

EP 0 356 601 A1

## Improvements in jet-propelled aircraft

The present invention relates to a jet-propelled aircraft of the known type having a wing and jet propulsion means adapted to direct propulsion jets over the dorsal surface of the wing adjacent its trailing edge, so as to achieve additional lift due to the supercirculation induced on the wing and the downward deflection of the jets which occurs as a result of the Coanda effect immediately downstream of the wing, and so as to define a single-surface ejector system in which the primary fluid is constituted by the jets, the secondary fluid is constituted by the relative air flow over the wing, and the successive zones of expansion, mixing and recompression of the ejector are defined by a single active surface constituted by the back of the wing.

An aircraft of the type described above constitutes the subject of the patent US-A-4478378 and of the corresponding European patent application EP-A-0078245 in the name of the same Applicant. By virtue of the characteristics described above, the aircraft is able to take off and land in extremely short distances and is extremely manoeuvrable.

The object of the present invention is further to improve the performance of the aircraft proposed previously, particularly from the point of view of stability in flight.

In order to achieve this object, the invention provides an aircraft of the type indicated at the beginning of the present description, characterised in that it has the general configuration of a delta-shaped all-wing aircraft with two fuselage sections between which is a central wing constituting the wing over which the propulsion jets are directed, the two rear ends of the fuselage sections having two vertical fin surfaces which project downwardly and extend beneath the centre of gravity of the aircraft, these fin surfaces being spaced from each other by a distance substantially corresponding to the width of the mixed stream of the propulsion jets and of the secondary flow downstream of the wing, so that these fin surfaces are laterally adjacent the mixed stream so as to achieve a self-stabilising effect which immediately corrects any tendency of the aircraft to assume a position in which its longitudinal axis is transversal to the direction of flight.

By virtue of the configuration described above, the aircraft according to the invention is extremely stable in flight. In particular, when the aircraft tends to assume a position in which its longitudinal axis is transversal with respect to the direction of flight, the relative air flow acquires a transverse component which is maintained in the secondary flow (sucked back by the ejector effect from the propulsion jets) and in the mixed stream downstream of the wing. The effect of this transverse component on the vertical fin surface towards which it is directed imparts to the aircraft a yawing moment and a rolling moment which tend to return the latter to its correct attitude in alignment with the direction of flight. In other words, the mixed stream downstream of the central wing of the aircraft constitutes a sort of rail engaged laterally by the two vertical fin surfaces so that any tendency of the aircraft to assume a position transversal to the direction of flight is automatically corrected. Since the two vertical fin surfaces are immediately adjacent the stream downstream of the wing, the correction of any tendency of the aircraft to assume a transversal position sideways is immediate.

Further characteristics and advantages of the invention will be explained in the description which follows with reference to the appended drawings, provided purely by way of non-limiting example, in which:

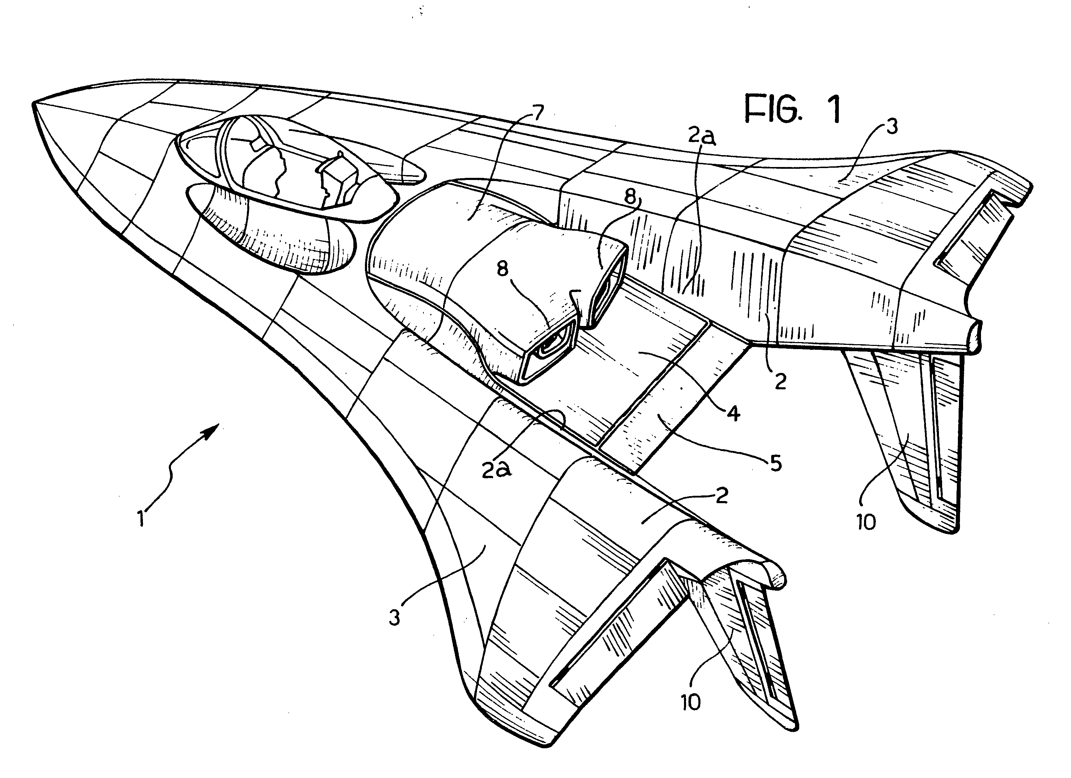

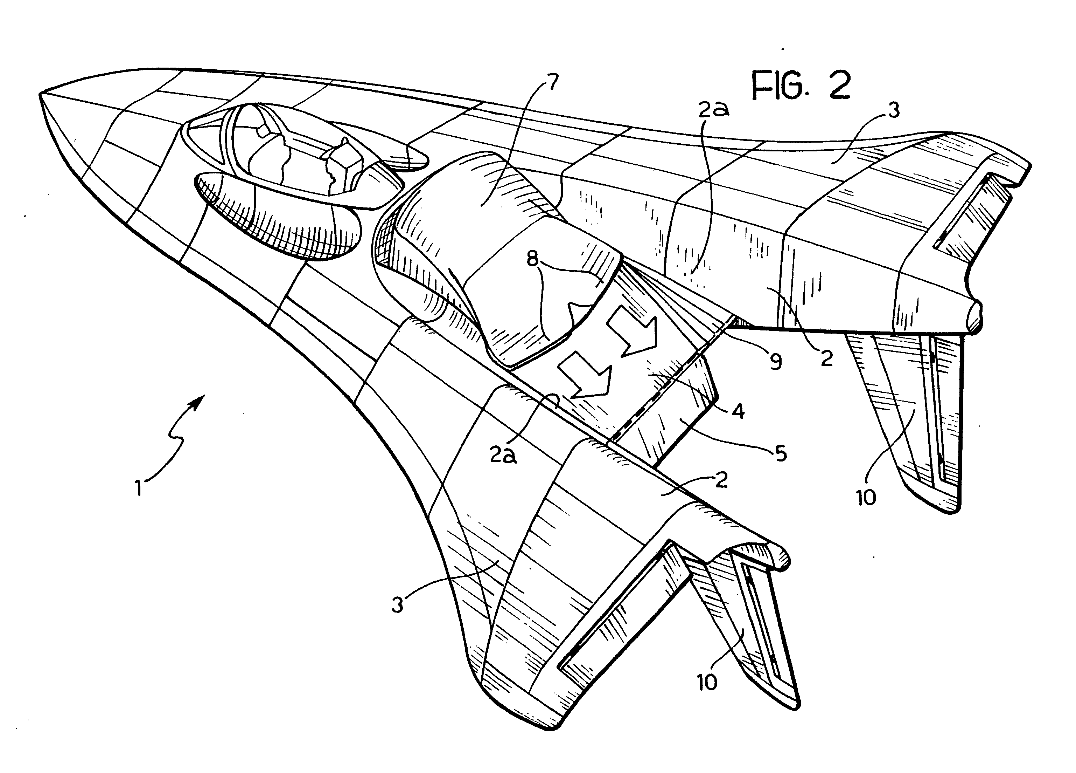

Figures 1 and 2 are two perspective views of the aircraft according to the invention in two different operative conditions, and

Figures 3 and 4 illustrate two partially-sectioned side views corresponding to the two operative conditions of Figures 1 and 2.

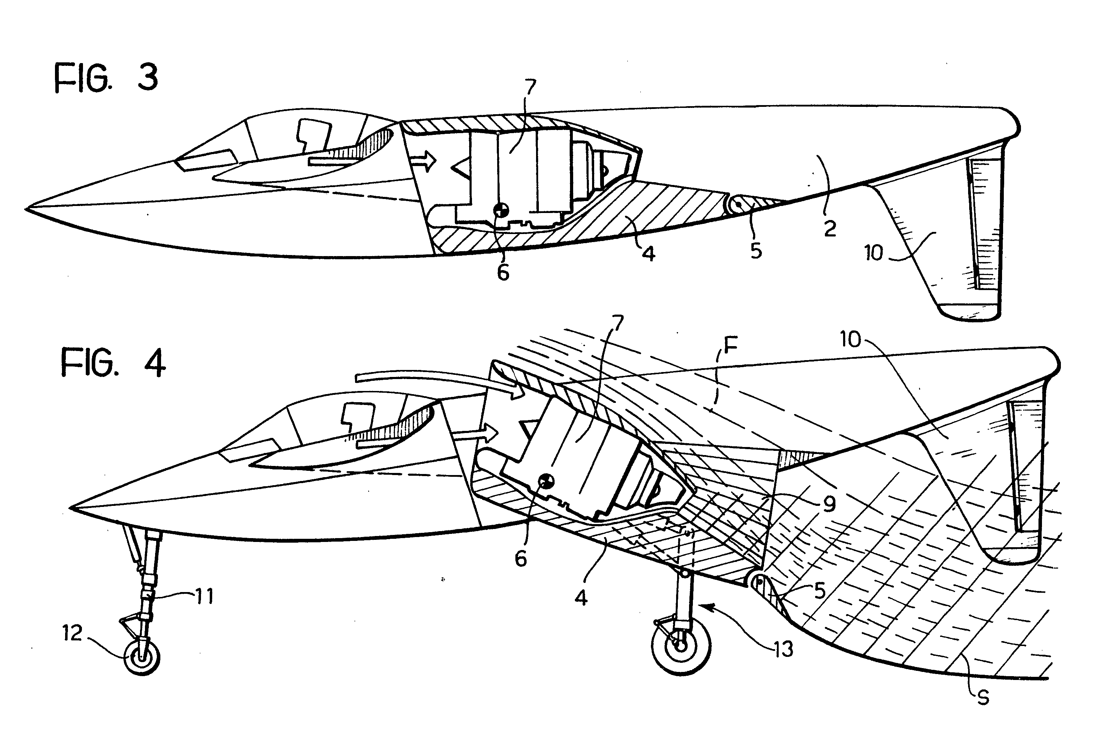

With reference to the drawings, an aircraft, generally indicated 1, has the general configuration of a delta-shaped all-wing aircraft with two fuselage sections 2 from which two lateral delta half-wings 3 extend outwardly and between which is a central wing 4 provided with a flap 5 and mounted for pivoting about a transverse axis 6 (see Figures 3 and 4) on the structure of the aircraft.

In the embodiment illustrated, the propulsion unit 7 for the aircraft is mounted on the structure of the wing 4 and thus moves with it when it pivots about the axis 6. The propulsion unit 7 has two rear nozzles 8 which generate a wide, flat jet which is directed over the dorsal surface of the central wing 4 close to its trailing edge. Naturally, the propulsion unit may be provided in a fixed position with means for deflecting the jets or several propulsion units may be provided, some fixed and some orientable. The sides of the wing 4 are delimited by the longitudinal surfaces 2a of the two fuselage sections 2. By virtue of this arrangement, the flow from the propulsion jets over the wing 4 gives rise, as already described in the patent US-A-4478378 by the Applicants, to a single-surface ejector system in which the primary fluid is constituted by the propulsion jets, the secondary fluid is constituted by the relative air flow over the wing, and the successive zones of expansion, mixing and recom-

2

pression of the ejector are defined by a single active surface constituted by the back of the wing. Moreover, the fact that the propulsion jets are directed onto the back of the wing close to its trailing edge causes a sharp downward deflection of these jets downstream of the wing due to the Coanda effect, as already described in the prior patent mentioned above.

By virtue of these characteristics, the aircraft has very high lift due to the circulation induced on the wing by the propulsion jets directed over it, due to the fact that the flow of the jets deflected downstream of the wing has a considerable vertical component, and due to the fact that this vertical component is further augmented as a result of the increased thrust of the propulsion jets generated by the ejector effect which is created over the wing 4. In order to ensure that a very considerable ejector effect is generated even when the wing 4 is rotated downwardly, as illustrated in Figure 4, seals 9 are preferably provided at the two sides of the wing 4 so as to join the lateral edges of the wing to the fuselage sections 2 and thus ensure that the space above the wing is closed at the sides even when the wing is lowered.

The possibility of pivoting of the wing 4 enables the direction of the resultant aerodynamic force generated by the deflected propulsion jets to be controlled.

The rear ends of the two fuselage sections 2 have two vertical fin surfaces 10 which project downwardly and extend beneath the centre of gravity of the aircraft 1. This arrangement ensures that these fin surfaces are located immediately adjacent the mixed stream downstream of the wing. For reasons which have been indicated above, this ensures that the aircraft is self-stabilising as regards any tendency to assume a transversal position to the direction of flight.

In Figure 4, the secondary flow which is sucked back by the propulsion jets due to the ejector effect is indicated F, while the broken area indicated S corresponds to the zone of mixing of these propulsion jets with the secondary flow.

The aircraft 1 has a front undercarriage 11 with a pair of wheels 12 and two rear undercarriages 13 carried by the central wing 4.

Coanda effect immediately downstream of the wing, and so as to define a single-surface ejector system in which the primary fluid is constituted by the jets, the secondary fluid is constituted by the relative air flow over the wing, and the successive zones of expansion, mixing and recompression of the ejector are defined by a single active surface constituted by the back of the wing (4), characterised in that the aircraft has the general configuration of a delta-shaped all-wing aircraft with two fuselage sections (2) between which is a central wing (4) constituting the wing over which the propulsion jets are directed, the two rear ends of the fuselage sections (2) having two vertical fin surfaces (10) which project downwardly and extend beneath the centre of gravity of the aircraft, these fin surfaces (10) being spaced from each other by a distance substantially corresponding to the width of the mixed stream of the propulsion jets and of the secondary flow downstream of the wing, so that these fin surfaces are laterally adjacent the mixed stream so as to achieve a self-stabilising effect which immediately corrects any tendency of the aircraft to assume a position in which its longitudinal axis is transversal to the direction of flight.

2. An aircraft according to Claim 1, characterised in that the central wing (4) is pivotable about a transverse axis (6) on the structure of the aircraft.

3. An aircraft according to Claim 2, characterised in that the jet propulsion means are carried by the central wing (4).

4. An aircraft according to Claim 3, characterised in that sealing elements are provided which connect the side edges of the central wing (4) to the two fuselage sections (2) so as to ensure that the space above the central wing (4) is closed laterally even when the wing (4) is pivoted downwardly.

5. An aircraft according to Claim 4, characterised in that the front undercarriage of the aircraft includes a pair of wheels.

## Claims

1. A jet-propelled aircraft of the known type having a wing (4) and jet propulsion means (7) adapted to direct propulsion jets over the dorsal surface of the wing (4) adjacent its trailing edge, so as to achieve additional lift due to the supercirculation induced on the wing (4) and the downward deflection of the jets which occurs as a result of the

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 478 378 (CAPUANI) <br> * Column 2, lines 1-38; column 4, line 52 - column 5, line 11, lines 24-31; figures 6-9 * <br> --- | 1 | B 64 C 15/02 <br> B 64 C 29/00 <br> B 64 C 39/10 <br> B 64 C 21/04 |
| A | WO-A-8 401 341 (BOEING) <br> * Page 5, line 24 - page 6, line 10; page 7, lines 12-27; figures 1-3,5,6 * <br> --- | 1-3,5 | |
| A | US-A-4 440 361 (McGANN) <br> * Column 2, lines 33-36,48-53; figures 3,4 * <br> ----- | 1 | |
| | | | TECHNICAL FIELDS SEARCHED (Int. Cl.4) |
| | | | B 64 C |

The present search report has been drawn up for all claims

| Place of search | Date of completion of the search | Examiner |
|---|---|---|
| THE HAGUE | 13-04-1989 | ZERI A. |